# EUROPEAN PATENT APPLICATION

(11) **EP 2 680 195 A1**
(43) Date of publication of application: **01.01.2014**
(21) Application number: 13172599.6
(22) Date of filing: 19.06.2013
(51) Int. Cl.: G06Q 10/06

(54) **Method and System for Identifying Unexplored Research Avenues from Publications**

(30) Priority: 26.06.2012 US 201213532830
(71) Applicant: Xerox Corporation, Rochester, New York 14644 (US)
(72) Inventor: Sandor, Agnes, 38240 Meylan (FR); Stavrianou, Anna, 38000 Grenoble (FR)
(74) Representative: Skone James, Robert Edmund

(57) **Abstract**

A method, system and a computer program for identifying unexplored research avenues in a plurality of publications is provided. Citation maps for the plurality of publications are generated (602). The initial set of publications is filtered (604) on the basis of the citation maps and resulting set of publications are ranked (606) according to their prestige value. Natural language processing means are used (608) to perform context matching in order to identify set of sentences in the publications. Paragraphs containing the set of sentences are displayed (610) to a user along with pointers to the respective publication.

## Description

### TECHNICAL FIELD

The presently disclosed embodiments are directed to identifying unexplored research avenues from a plurality of publications.

### BACKGROUND

The growth in research in various fields such as computer science and biomedical have led to a proliferation of publications. Every day, hundreds of research papers are added to various scientific journals and databases. This exponential growth in the number of research papers eventually leads to a scarcity of new ideas which can be further explored. Users scan various databases and use known sorting techniques to sift the vast sea of scientific literature to look for ideas which are worthy of more research. However, the corpus of these research papers is so vast that it takes up a lot of time for users to actually identify publications which contain promising ideas.

In light of the above, what is needed is a technique to enable users to identify promising challenges from a large corpus of publications with ease and minimal time input.

### SUMMARY

In an embodiment, a method is provided for identifying unexplored research avenues within a plurality of publications. The method includes generating a citation map for the plurality of publications, creating a first sub-set of publications from the plurality of publications on the basis of the citation map, ranking the first sub-set of publications on the basis of a first pre-defined criteria, using language processing means for identifying a set of sentences in the ranked publications, wherein the set of sentences represents the one or more unexplored research avenues, and displaying the set of sentences from the ranked publications.

In another embodiment, a system is provided for identifying unexplored research avenues within a plurality of publications. The system includes a citation map generator for generating a citation map from the plurality of publications, a ranking module for ranking a first sub-set of publications on the basis of a pre-defined criteria, a language processing engine for identifying a set of sentences from the sub-set of the ranked publications, wherein the set of sentences represents one or more unexplored research avenues, and a display for displaying the set of sentences from the ranked publications.

In another embodiment, a computer program product is provided for identifying unexplored research avenues within a plurality of publications. The computer program product includes program instruction means for creating a citation map from the plurality of publications, program instruction means for creating a first sub-set of publications from the plurality of publications on the basis of outcome of the citation maps, program instruction means for ranking the first sub-set of publications on the basis of a pre-defined criteria, program instruction means for using language processing means for identifying a set of sentences in the ranked publications, wherein the set of sentences represents the one or more unexplored research avenues, and program instruction means for displaying the set of sentences from the ranked publications.

### BRIEF DESCRIPTION OF DRAWINGS

Various embodiments will hereinafter be described in accordance with the appended drawings provided to illustrate and not to limit the scope in any manner, wherein like designations denote similar elements, and in which:

FIG. 1 is a block diagram illustrating elements of a system for identifying unexplored research avenues from publications, in accordance with an embodiment;

FIG. 2 illustrates sentences which are classified under the label 'Contrasting Ideas' in accordance with an embodiment;

FIG. 3 illustrates sentences which are classified under the label 'Novelty' in accordance with an embodiment;

FIG. 4 illustrates sentences which are classified under the label 'Surprise' in accordance with an embodiment;

FIG. 5 illustrates sentences which are classified under the label 'Open Questions' in accordance with an embodiment; and

FIG. 6 is a flowchart detailing the steps involved in identification of publications containing promising challenges from a corpus of scientific literature in accordance with an embodiment.

### DETAILED DESCRIPTION OF DRAWINGS

Definition of Terms: Terms not specifically defined herein should be given the meanings that would be given to them by one of skill in the art in light of the disclosure and the context. As used in the present specification and claims, however, unless specified to the contrary, the following terms have the meaning indicated.

An unexplored research avenue/ promising challenge: An unexplored research avenue/ promising challenge shall be defined as a set of sentences extracted from a set of publications, which inferred from user preference and statistical analysis, indicates the presence of a topic that can be of interest to a user.

Publication: A publication shall be defined as any document or set of information that is available for view by a population, for a fee or otherwise. In an embodiment, the publication can be from any field such as legal, medical, hi-tech, and/ or pharmaceuticals. In an embodiment, for example, the disclosed embodiments can be used to identify ideas of interest/ challenge from scholarly articles and/or statutes, judicial decisions, and other official documents from the legal domain. It will be appreciated by a person having ordinary skill in the art that the various fields listed above are provided only as an example and are not meant to limit the scope of the present disclosure.

Citation: A citation shall be defined as a note in a publication which indicates that the publication either refers or is referred by another publication.

Forward Citation: A forward citation for a particular publication shall be defined as a publication which refers that particular publication.

Backward Citation: A backward citation for a particular publication shall be defined as a publication which is referred by that particular publication.

Citation Map: A citation map shall be defined as a graphical representation of the backward and forward citations of a publication.

Hub Value: Hub value for a publication shall be defined as the number of backward citations of a publication, or a metric at least partially related to that number. A higher hub value will represent higher number of backward citations and a lower hub value will represent a lower number of backward citations. Further, it will be appreciated by a person having ordinary skill in the art that the hub value of a publication can change over time depending on new backward citations being added to the publication.

Authority Value: Authority value of a publication shall be defined number of forward citations of a publication, or a metric at least partially related to that number. A higher authority value will represent higher number of forward citations and a lower authority value will represent a lower number of forward citations. Further, it will be appreciated by a person having ordinary skill in the art that the authority value of a publication can change over time depending on new forward citations being added to the publication.

The present disclosure is best understood with reference to the detailed figures and description set forth herein. Various embodiments are discussed below with reference to the figures. However, those skilled in the art will readily appreciate that the detailed description given herein with respect to these figures is just for explanatory purposes as the method and the system extend beyond the described embodiments. For example, those skilled in the art will appreciate, in light of the teachings presented, recognizing multiple alternate and suitable approaches, depending on the needs of a particular application, to implement the functionality of any detail described herein, beyond the particular implementation choices in the following embodiments described and shown. The detailed description of the embodiments will now be presented in conjunction with the accompanying drawings.

A method, system, and a computer program product for identifying scientific literature containing promising challenges are disclosed.

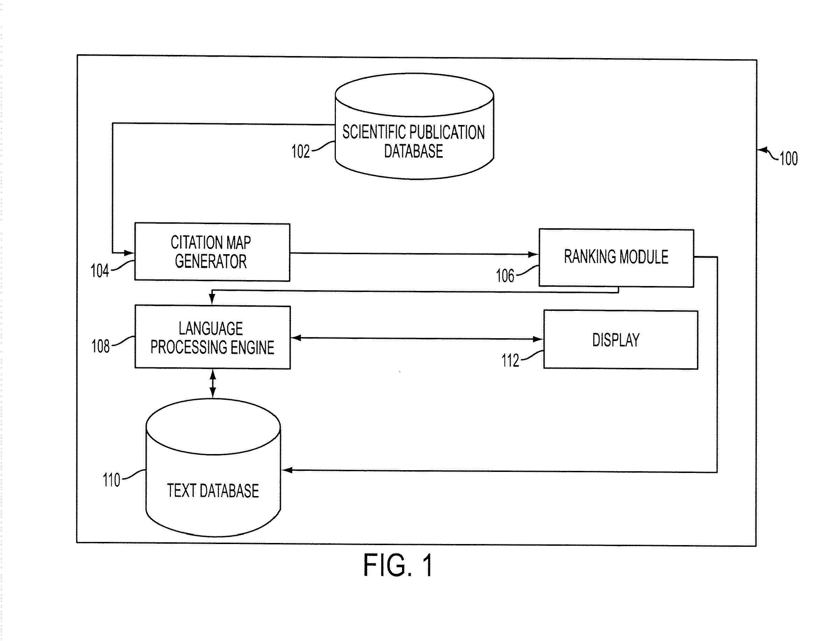

FIG. 1 is a block diagram illustrating elements of a computer system 100 for parsing publications in accordance with an embodiment. FIG. 1 comprises a publication database 102, a citation map generator 104, a ranking module 106, a language processing engine 108 a display 112, and a text database 110. In an embodiment, a publication refers to a scientific publication.

The publication database 102 can be any known database which contains various publications of one or more scientific fields. For example, the publication database 102 can be the IEEE Xplore database in an embodiment. In another embodiment, the publication database 102 can be the PUBMED database. The publication database 102 contains publications from various domains. It will be understood by a person having ordinary skill in the art that a user can sort the publication database 102 by scientific fields of interest. For example, a user can sort the publication database 102 to look only at publications from a telecommunications domain in an embodiment. In another embodiment, the user can look at only a pharmaceutical focused scientific literature. The publication database 102 is communicatively coupled with the citation map generator 104. Once the user has identified all the publications from his/ her area of interest, the publications can be downloaded from publication database 102 and parsed through the citation map generator 104. The citation map generator 104 creates a citation map of each of the downloaded publication. A citation map of a publication is a graphical representation of the degree of citation of the publication. The degree of citations can enable a user to see how well the document is cited or citing in the given scientific domain.

In an embodiment, the citation map is not displayed to the user. The user can define various parameters of interest and publications for which the citation map closely matches the user specified parameters can directly be used for a hub and authority value calculation.

Further, the citation map generator 104 also allocates a numerical value to each of the publications on the basis of the number of forward and backward citation of the publication. The numerical value assigned to the publication on the basis of its backward citations indicates the publication's hub value. The numerical value assigned to the publication on the basis of its forward citations indicates the publication's authority value. The concept of hub and authority values and the process of calculating the same are well known in the art. Any known technique for calculating the hub and authority values can be used by the citation map generator 104. For example, the Hyperlink-Induced Topic Search (HITS) algorithm (Kleinberg et al), can be used. A citation map is created for each of the publications downloaded from a database. On the basis of the citation maps, a ranking of the publications, on the basis of its authority/ hub value, is computed by the citation map generator 104. Any known ranking technique for achieving the aforesaid can be used. For example, the Hyperlink-Induced Topic Search (HITS) algorithm (Kleinberg et al), can be used. The citation map generator 104 uses the HITS algorithm to rank each of the publication on the basis of its authority/ hub value.

The ranking of the hubs and authorities by the HITS algorithm is based on a mutual reinforcing relationship between a hub value and an authority value. According to this relationship, a "good" authority is pointed to by many "good" hubs and vice versa. In an embodiment, a good authority can be described as a very influential publication in a given scientific domain. In the same embodiment, a good hub represents an acknowledged source for referencing various important publications.

The HITS algorithm can be used to calculate the authority values and the hub values of the publications. For the purpose of identifying promising challenges from publications, it is assumed that the publications with a high authority value will rarely contain ideas that are yet to be explored. Similarly, a publication with a very high hub value will generally be a very good source of reference for other publications, but is not expected to contain new ideas in its own subject matter. Hence, in an embodiment, the publications ranked by the citation map generator 104, on the basis of their authority and hub value using the HITS algorithm are pruned in order to create a first sub-set of publications. In an embodiment, a user can define a threshold value for the authority value of publications. If a publication's authority value is beyond the first pre-defined threshold, then these publications will be removed from the dataset. Similarly, a second user-defined threshold can be used to prune publications whose hub value is beyond the second user-defined threshold. The first and second pre-defined threshold, as set by the user, can be entered in to the citation map generator 104 through any known data input means. The citation map generator 104 will then use these values to remove publications from the dataset and output the first sub-set of publications.

The first sub-set of publications is then passed through the ranking module 106 for further pruning by using at least one technique. It will be appreciated by a person ordinarily skilled in the art that even the first sub-set of publications will be significantly large given the large corpus of publications available in various databases. In order to further sift through the large volume of publications, the ranking module 106, uses at least one technique in order to rank the publications. In an embodiment, the PageRank™ (Brin and Page et al) technique, is used.

The PageRank™ technique uses a recursive calculation to rank publications (or web pages) according to their importance. According to the PageRank™ technique, a publication X, which is cited by many publications is considered as a good publication if the publications citing X are also cited by many other publications. Hence, the worth of a publication with a high authority value can be further checked by checking whether it is being cited by publications which are equally popular in the domain. In an embodiment, the ranking module 106 further ranks the first sub-set of publications using the PageRank™ technique.

In an embodiment, the ranking module 106 further applies Social Network Analysis (SNA) measures to the ranked set of publications to narrow down the ranked set of publications to publications which have a higher potential of containing promising challenges. SNA measures are used in an embodiment to determine the importance of the ranked publications. In an embodiment, various SNA-based centrality measures can be used to determine the importance of the publications in a group of publications. In an embodiment, the ranking module 106 is configured to use centrality measures in order to short-list publications which can contain promising challenges.

In an embodiment, the various centrality measures that can be applied by the ranking module 106 are Degree Centrality, Betweenness Centrality, and Closeness Centrality. In an embodiment, 'Degree Centrality' can be used to further filter down to publications which can potentially contain the promising challenges. Degree centrality measure helps identify publications which are extremely popular in terms of the number of forward citations. Hence, a user can choose to consider a publication, from the ranked set of publications, with a high authority value.

In another embodiment, 'Betweenness Centrality' can be used to further filter down to publications which can potentially contain promising challenges. 'Betweenness Centrality' can be employed when a user expects to identify interdisciplinary challenges. The 'betweenness centrality' measure identifies publications which cite or are cited by publications from different fields/ research topics.

In another embodiment, 'Closeness Centrality' measure can be used to further filter down to publications which can potentially contain promising challenges. The 'closeness centrality' measure identifies publications that act as hubs for publications from varied fields. A user can choose to use this measure if he/she is interested in identifying publications that act as a reference to various publications from different fields.

It will be understood by a person skilled in the art that various SNA measures listed above have been provided as examples. The ranking module 106 can be configured to apply any SNA measure depending on the specific requirements of a user.

The ranking module 106 outputs a set of publications which can potentially contain promising challenges representing unexplored research avenues. These publications are provided as input to the language processing engine 108. The language processing engine 108 applies natural language processing techniques on the ranked publications in order to identify publications which contain promising challenges. Based on various rules, the language processing engine 108 identifies various sentences from the publications. The identification of these sentences indicates the presence of promising challenges/unexplored research avenues in the ranked publication. Further, these sentences are continuously stored in the text database 110. The language processing engine can be pre-programmed with various rules to identify sentences which can lead to promising challenges. Techniques and rules for programming the language processing engine 108 to identify sentences which can lead to promising challenges are disclosed in the following patents: US 7,689,411 'Concept matching' issued March 30, 2010 to Xerox Corporation; and US 7,809,551 'Concept matching system' issued October 5, 2010 to Xerox Corporation, the disclosures of which is incorporated herein by reference in its entirety. Through these techniques, the language processing engine 108 is able to identify if the ranked documents contain sentences which can indicate promising challenges.

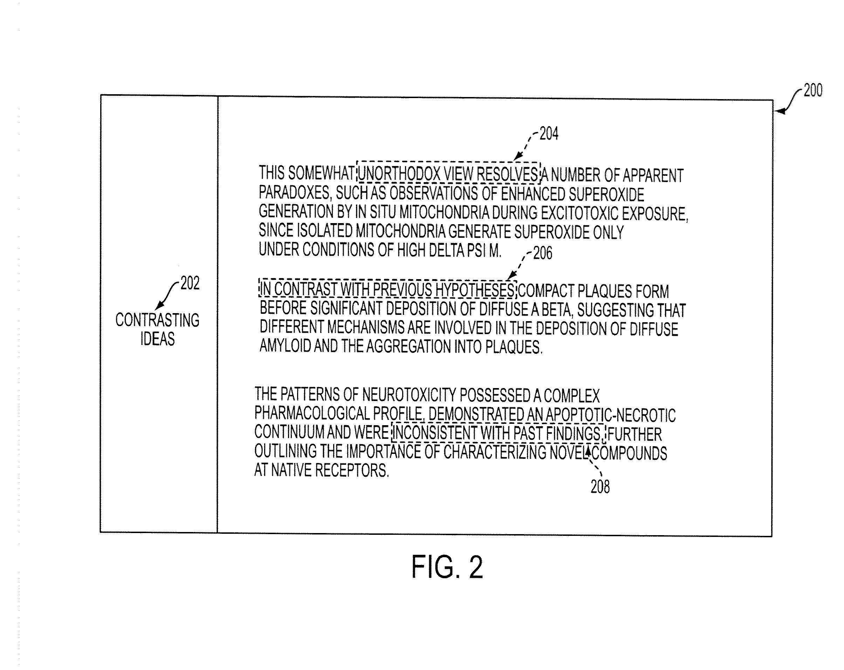

Once the sentences are identified by the language processing engine 108, in the publications, labels are assigned to these sentences. Further, the labels assigned to the sentences make it easier for a user to know beforehand what kind of promising challenge he/she can expect in the publication. In an embodiment, the following labels are assigned to the sentences: 'contrasting ideas,' 'novelty,' 'surprise,' 'open question' etc. The sentences which are categorized under the various labels will now be discussed in more detail in conjunction with the description for FIGS. 2-5.

FIG. 2 illustrates the sentences which are classified under the label 'Contrasting Ideas.' In FIG. 2, 202 represents the label which has been assigned by the language processing engine 108 to the category under which sentences identified in a particular publication are classified. In an embodiment, 204, 206, and 208 represent the sentences which indicate contrasting ideas in the particular publication. It will be appreciated by a person having ordinary skill in the art that sentences 204, 206, and 208 are provided only as an example and are not meant to limit the scope of the disclosure. The language processing engine 108 uses concept matching to identify sentences which can help identify contrasting ideas in the publication.

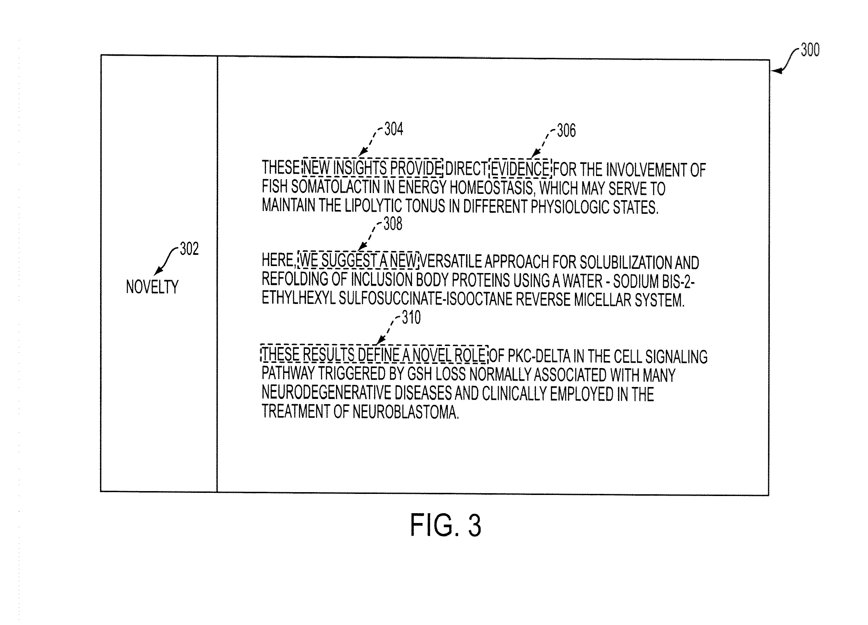

FIG. 3 illustrates the sentences which are classified under the label 'Novelty.' In FIG. 3, 302 represents the label which has been assigned by the language processing engine 108 to the category under which sentences identified in a particular publication are classified. In an embodiment, 304, 306, 308 and 310 represent the sentences which indicate novel ideas in the particular publication.

It will be appreciated by a person having ordinary skill in the art that sentences 304, 306, and 308 are provided only as an example and are not meant to limit the scope of the disclosure. The language processing engine 108 uses concept matching to identify sentences which can help identify novel ideas in the publication.

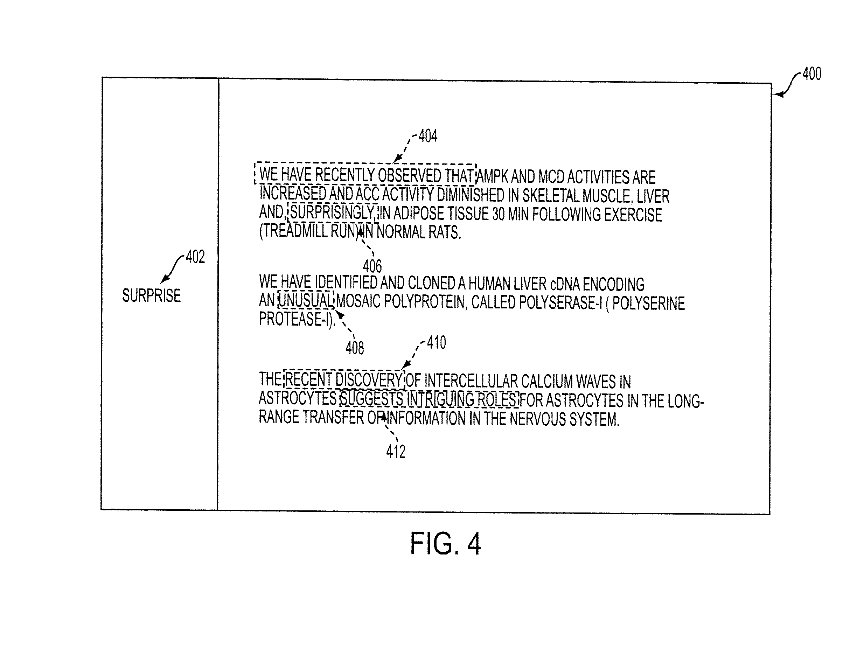

FIG. 4 illustrates the sentences which are classified under the label 'Surprise.' In FIG. 4, 402 represents the label which has been assigned by the language processing engine 108 to the category under which sentences identified in a particular publication are classified. In an embodiment, 404, 406, 408, 410, and 412 represent the sentences which indicate surprising outcomes in the particular publication.

It will be appreciated by a person having ordinary skill in the art that sentences 404, 406, 408, and 410 are provided only as an example and are not meant to limit the scope of the disclosure. The language processing engine 108 uses concept matching to identify sentences which can help identify publications which contain promising challenges indicating a surprise in findings.

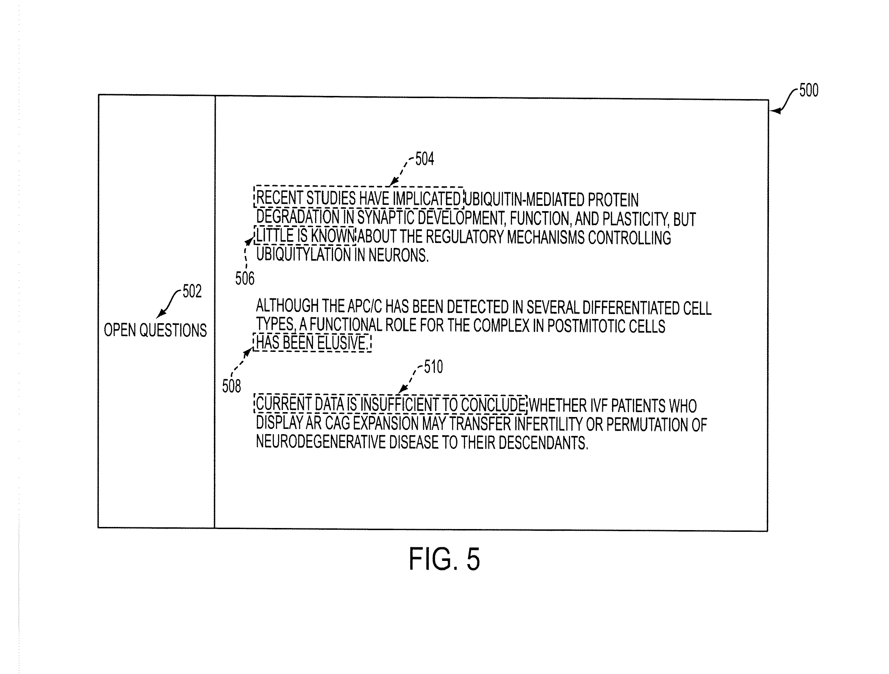

FIG. 5 illustrates the sentences which are classified under the label 'Open Questions.' In FIG. 5, 502 represents the label which has been assigned by the language processing engine 108 to the category under which sentences identified in a particular publication are classified. In an embodiment, 504, 506, 508, and 510 represent the sentences which indicate open questions in the particular publication.

It will be appreciated by a person having ordinary skill in the art that sentences 504, 506, 508, and 510 are provided only as an example and are not meant to limit the scope of the disclosure. The language processing engine 108 uses concept matching to identify sentences which can help identify publications which contain open questions indicating the presence of an unexplored research avenue.

It will be understood and appreciated by a person skilled in the art that the four labels described above are only provided as an example. More labels can be defined and used in order to capture other ideas from the publications.

Once the sentences indicating the presence of the promising challenges in a publication have been ascertained, the user can be presented with the paragraph containing that sentence. In an embodiment, the paragraph comprising the sentence which indicates a promising challenge in a publication is displayed to the user on the display 112. The display 112 also displays a pointer indicating the publication from which the paragraph has been sourced.

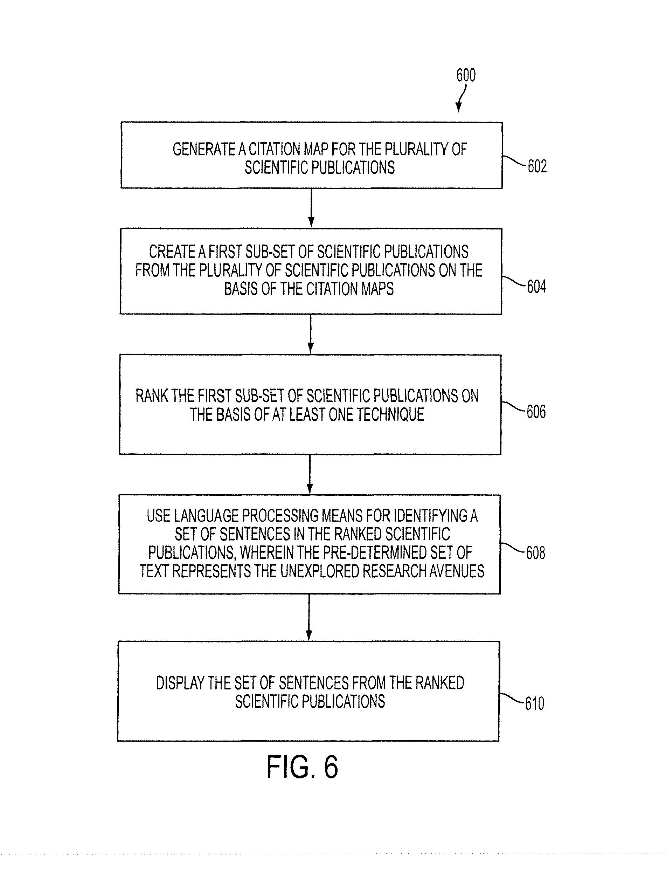

FIG. 6 is a flowchart detailing the steps involved in the identification of publications containing promising challenges from a corpus of publications. At 602, citation maps for the corpus of scientific literature specific to a domain are created. Using the HITS algorithm, publications with high authority or hub values are removed from the downloaded literature and a first sub-set of publications are created at 604. For removing publications, a user can set a first and second pre-defined threshold. As has been set forth in the description for FIG. 1, the threshold for removing publications on the basis of their hub/ authority value will be defined by the user. At 606, in an embodiment, PageRank™ technique is used to rank the first sub-set of publications according to their importance in the domain. It will be understood by a person skilled in the art that the PageRank™ technique has been used only as an example and various other ranking techniques can be employed without departing from the scope of the disclosed embodiments. The results obtained by using PageRank™ can be further fine-grained by the application of SNA measures. The definition and application of SNA measures has been discussed in detail in the description for FIGS. 1-5. Once the publications which can potentially contain promising challenges have been identified, language processing means are used to identify a set of sentence in the text of the publications at 608. These set of sentences indicate the presence of promising challenges. The process of identifying the set of sentences in the publications, through concept matching, has been discussed in detail in the description for FIGS. 1-5. At 610, paragraphs containing the set of sentences in the publications are displayed to the user along with pointer to the relevant publication.

In an embodiment, newly released publications can also be considered for identifying promising challenges through the disclosed embodiments. A newly released publication will take some time to be cited by other publications. However, the new publication will have backward citations and hence a hub value. This hub value can be used as a parameter to rank the new publication and to consider it for identification of unexplored research avenues. It will be understood by a person having ordinary skill in the art that a newly released publication will, however, be comparatively lower ranked in the overall publications set.

The method, system and computer program product described above have numerous advantages. The present disclosure proposes a method for identifying promising challenges from a corpus of scientific literature in a particular domain. It alleviates the problem of sifting through large volumes of scientific literature in a manual or semi-automated fashion. Citation maps, ranking techniques and natural language processing are used to sift through large volumes of scientific literature to identify sentences which indicate the presence of promising challenges in a publication. The user is presented with the paragraph containing the said sentences and a pointer towards the respective publication. A user can use this method, system, and computer program product to identify ideas which can be researched further. The disclosed embodiments are especially beneficial in light of the large volumes of publications being released every day. A user can be freed up of the task of reading numerous publications in order to identify ideas that can be researched further.

The disclosed methods and systems, as described in the ongoing description or any of its components, may be embodied in the form of a computer system. Typical examples of a computer system include a general-purpose computer, a programmed microprocessor, a micro-controller, a peripheral integrated circuit element, and other devices or arrangements of devices that are capable of implementing the steps that constitute the method of the disclosure.

The computer system comprises a computer, an input device, a display unit and the Internet. The computer further comprises a microprocessor. The microprocessor is connected to a communication bus. The computer also includes a memory. The memory may be Random Access Memory (RAM) or Read Only Memory (ROM). The computer system further comprises a storage device, which may be a hard-disk drive or a removable storage drive, such as, a floppy-disk drive, optical-disk drive, etc. The storage device may also be other similar means for loading computer programs or other instructions into the computer system. The computer system also includes a communication unit. The communication unit allows the computer to connect to other databases and the Internet through an Input/output (I/O) interface, allowing the transfer as well as reception of data from other databases. The communication unit may include a modem, an Ethernet card, or other similar devices, which enable the computer system to connect to databases and networks, such as, LAN, MAN, WAN, and the Internet. The computer system facilitates inputs from a user through input device, accessible to the system through an I/O interface.

The computer system executes a set of instructions that are stored in one or more storage elements, in order to process input data. The storage elements may also hold data or other information as desired. The storage element may be in the form of an information source or a physical memory element present in the processing machine.

The programmable or computer readable instructions may include various commands that instruct the processing machine to perform specific tasks, such as, the steps that constitute the method of the disclosure. The method and systems described can also be implemented using only software programming or using only hardware or by a varying combination of the two techniques. The disclosure is independent of the programming language and the operating system used in the computers. The instructions for the disclosure can be written in all programming languages including, but not limited to 'C', 'C++', 'Visual C++' and 'Visual Basic'. Further, the software may be in the form of a collection of separate programs, a program module with a larger program or a portion of a program module, as in the disclosure. The software may also include modular programming in the form of object-oriented programming. The processing of input data by the processing machine may be in response to user commands, results of previous processing or a request made by another processing machine. The disclosure can also be implemented in all operating systems and platforms including, but not limited to, 'Unix', 'DOS', 'Android', 'Symbian', and 'Linux'.

The programmable instructions can be stored and transmitted on a computer-readable medium. The disclosure can also be embodied in a computer program product comprising a computer-readable medium, with the product capable of implementing the above methods and systems, or the numerous possible variations thereof.

It will be appreciated that the description provided above in conjunction with the drawings is in no way meant to limit the scope of the disclosed embodiments. The description provided is in accordance with an embodiment. It will be understood by a person ordinarily skilled in the art that many more embodiments are possible and that the scope of the disclosed embodiments is covered by the claims set forth.

Those skilled in the art will appreciate that any of the foregoing steps and/or system modules may be suitably replaced, reordered, or removed, and additional steps and/or system modules may be inserted, depending on the needs of a particular application, and that the systems of the foregoing embodiments may be implemented using a wide variety of suitable processes and system modules and is not limited to any particular computer hardware, software, middleware, firmware, microcode, etc.

The claims can encompass embodiments for hardware, software, or a combination thereof.

## Claims

1. A method for identifying one or more unexplored research avenues within a plurality of publications, the method comprising:
generating a citation map for the plurality of publications;
creating a first sub-set of publications from the plurality of publications on the basis of the citation map;
ranking the first sub-set of publications using at least one technique;
using language processing means for identifying a set of sentences in the ranked publications, wherein the set of sentences represents the one or more unexplored research avenues; and
displaying the set of sentences from the ranked publications.

2. The method of claim 1, further comprising using social network analysis to filter the ranked set of publications.

3. The method of claim 1 or claim 2, further comprising displaying pointers to the ranked publications which contain the set of sentences.

4. The method of any of the preceding claims, wherein the displaying comprises displaying a paragraph comprising the set of sentences.

5. The method of any of the preceding claims, wherein the citation maps outputs an authority value of each of the plurality of publications.

6. The method of any of the preceding claims, wherein the citation maps outputs a hub value of each of the plurality of publications.

7. The method of any of the preceding claims, wherein the first sub-set of publications is created by removing publications from the plurality of publications which authority value beyond a first pre-determined threshold.

8. The method of any of the preceding claims, wherein the first sub-set of publications is created by removing publications from the plurality of publications which exhibit hub value beyond a second pre-determined threshold.

9. The method of any of the preceding claims, further comprising creating a database of the set of sentences.

10. A system for identifying one or more unexplored research avenues within a plurality of publications, the system comprising:
a citation map generator for generating a citation map from the plurality of publications;
a ranking module for ranking a first sub-set of publications on the basis of a at least one technique;
a language processing engine for identifying a set of sentences in the ranked publications, wherein the set of sentences represents the one or more unexplored research avenues; and
a display for displaying the set of sentences from the ranked publications.

11. A computer program product for use with a computer, the computer program product comprising a computer readable program code embodied therein for identifying one or more unexplored research avenues within a plurality of publications, the computer readable program code comprising:
program instruction means for creating a citation map from the plurality of publications;
program instruction means for creating a first sub-set of publications from the plurality of publications on the basis of outcome of the citation maps;
program instruction means for ranking the first sub-set of publications on the basis of at least one technique;
program instruction means for using language processing means for identifying a set of sentences in the ranked publications, wherein the set of sentences represents the one or more unexplored research avenues; and
program instruction means for displaying the set of sentences from the ranked publications.

12. The system of claim 10 or the computer program product of claim 11, wherein the citation maps outputs an authority value of each of the plurality of publications.

13. The system of claim 10 or the computer program product of claim 11 or claim 12, wherein the citation maps outputs a hub value of each of the plurality of publications.

14. The system of claim 10 or the computer program product of any of claims 11 to 13, wherein the first sub-set of publications is created by removing publications from the plurality of publications which exhibit the authority value beyond a first pre-determined threshold.

15. The system of claim 10 or the computer program product of any of claims 11 to 14, wherein the first sub-set of publications is created by removing publications from the plurality of publications which exhibit the hub value beyond a second pre-determined threshold.
